# EUROPÄISCHE PATENTSCHRIFT

(11) **EP 3 568 267 B1**
(45) Veröffentlichungstag und Bekanntmachung des Hinweises auf die Patenterteilung: **18.11.2020**
(21) Anmeldenummer: 18707262.4
(22) Anmeldetag: 08.02.2018
(51) Int. Cl.: B25J 9/10, B25J 15/00

(54) **ROBOTEREINHEIT MIT SEPARATEN AKTOREN UND GEMEINSAMER GEGENAKTOREINRICHTUNG FÜR MEHRERE GLIEDER**
ROBOT UNIT HAVING SEPARATE ACTUATORS AND A COMMON COUNTER ACTUATOR DEVICE FOR MULTIPLE MEMBERS
UNITÉ DE ROBOT COMPRENANT DES ACTIONNEURS SÉPARÉS ET UN DISPOSITIF ACTIONNEUR ANTAGONISTE COMMUN À PLUSIEURS MEMBRES

(30) Priorität: 28.02.2017 DE 102017203237
(43) Veröffentlichungstag der Anmeldung: 20.11.2019
(73) Patentinhaber: Siemens Aktiengesellschaft, 80333 München (DE)
(72) Erfinder: BACHMAIER, Georg, 80469 München (DE); BACHMANN, Christian, 80686 München (DE); PAIS, Guillaume, 81667 München (DE); VITTORIAS, Iason, 80538 München (DE); ZÖLS, Wolfgang, 81249 München-Lochhausen (DE)
(86) Internationale Anmeldenummer: PCT/EP2018/053166
(87) Internationale Veröffentlichungsnummer: WO 2018/158060

(56) Entgegenhaltungen:
- EP-A1- 2 239 106
- WO-A2-2015/063523
- JP-A- 2008 032 140
- US-A- 5 762 390
- GIANLUCA PALLI ET AL: "Modeling, Identification, and Control of Tendon-Based Actuation Systems", IEEE TRANSACTIONS ON ROBOTICS, IEEE SERVICE CENTER, PISCATAWAY, NJ, US, Bd. 28, Nr. 2, 1. April 2012 (2012-04-01), Seiten 277-290, XP011440520, ISSN: 1552-3098, DOI: 10.1109/TRO.2011.2171610

## Beschreibung

Die Erfindung betrifft eine Robotereinheit für eine technische Apparatur mit zwei schwenkbar gelagerten Gliedern, welche jeweils mittels eines separaten Aktors bezüglich eines Freiheitsgrades in eine Richtung bewegbar sind. Die Erfindung betrifft außerdem eine technische Apparatur mit einer solchen Robotereinheit.

Da anpassungsfähige und vielseitige technische Apparaturen, insbesondere für die Produktion, eine hohe Gewandtheit von Robotereinheiten bei der Handhabung von Werkstücken erfordern den vielfach aktuierten Robotereinheiten, insbesondere Roboterhände, heutzutage weit verbreitet. Um eine kompakte Bauform der Robotereinheit zu gewährleisten, ist ein Antrieb von beweglichen Elementen der Robotereinheit nach Art eines Seilzugs besonders vorteilhaft. Dadurch, dass die Aktoren nicht direkt an den beweglichen Teilen angeordnet sind, ist eine besonders kompakte Bauform der beweglichen Teile, welche insbesondere als Glieder ausgebildet sind, möglich. Eine Knieprothese mit zwei Antriebseinheiten, welche über eine Feder an einem Kniegelenk angeordnet sind, ist beispielsweise aus der US 2010/031 23 63 bekannt.

Gemäß dem Stand der Technik ist es üblich, für jeden Freiheitsgrad eines Gliedes zwei Antriebseinheiten, insbesondere einen Aktor und einen Gegenaktor, einzusetzen. Bei dem Aktor und dem Gegenaktor handelt es sich insbesondere um Antriebseinheiten, mittels derer das Glied in gegenläufige Richtungen bewegbar ist. Dies kann auch als Agonist-Antagonist-Anordnung der Antriebseinheiten bezeichnet werden.

Bei einer Robotereinheit mit vielen beweglichen Teilen, insbesondere vielen Gliedern, sind können viele Antriebseinheiten notwendig, um alle Glieder unabhängig in jede Richtung bewegen zu können. Dies wird auch als vollständige Aktuierung bezeichnet. Beispielsweise können für eine Robotereinheit, die als Roboterhand ausgebildet ist und vorzugsweise in der menschlichen Hand nachempfunden ist, 48 Antriebseinheiten, insbesondere 24 Aktoren und 24 Gegenaktoren, notwendig sein, um eine vollständige Aktuierung aller Freiheitsgrade aller Glieder zu ermöglichen.

Um die Anzahl notwendiger Antriebseinheiten zu reduzieren, bietet der Stand der Technik die Möglichkeit, Gegenaktoren durch passive Elemente, insbesondere elastische Elemente, beispielsweise Gummis oder Federn, zu ersetzen. In diesem Fall ist nur eine einzelne Antriebseinheit pro Freiheitsgrad notwendig. Eine Bewegung entgegen der einzelnen Antriebseinheit kann durch in dem passiven Element gespeicherte Spannungsenergie vorgenommen werden. Die verbleibende Antriebseinheit, insbesondere der Aktor, muss in diesem Fall jedoch leistungsfähiger ausgelegt sein, da die verbleibende Antriebseinheit gleichzeitig zu einer Bewegungskraft zu Bewegung des Gliedes auch eine Widerstandskraft des passiven Elements überwinden muss. Somit geht ein Teil der Antriebskraft der verbleibenden Antriebseinheit in dem passiven Element verloren.

Eine alternative Möglichkeit ist es, Freiheitsgrade verschiedener Glieder miteinander zu koppeln. Dies wird auch als Unteraktuierung bezeichnet. In diesem Fall sind beispielsweise für zwei Glieder zusammen ein Aktor und ein Gegenaktor vorgesehen. Durch den Verzicht auf Freiheitsgrade bei der Bewegung der Robotereinheit nimmt jedoch die Gewandtheit der Robotereinheit stark ab.

In dem Artikel "Modeling, Identification, and Control of Tendon-Based Actuation Systems", Gianluca Palli et al., IEEE Transactions on Robotics, 2012, ist eine Roboterhand beschrieben. Diese weist eine Unteraktuierung an den einzelnen Fingern der Roboterhand auf.

Die US 5 762 390 schlägt eine Unteraktuierung an unterschiedlichen Fingern einer Roboterhand zusätzlich zur Unteraktuierung an den einzelnen Fingern der Roboterhand vor.

Es ist Aufgabe der vorliegenden Erfindung, die Anzahl an Antriebseinheiten für die Glieder einer Robotereinheit gegenüber einer vollständigen Aktuierung zu verringern.

Diese Aufgabe wird erfindungsgemäß gelöst durch die Gegenstände der unabhängigen Patentansprüche. Vorteilhafte Ausführungsformen mit zweckmäßigen Weiterbildungen der erfindungsgemäßen Robotereinheit sind Gegenstand der Unteransprüche und gelten analog auch für die technische Apparatur.

Eine Robotereinheit für eine technische Apparatur weist eine Basis auf, über welche die Robotereinheit an der technischen Apparatur anordenbar ist. Die Robotereinheit umfasst außerdem ein erstes Glied, das an der Basis schwenkbar gelagert ist, und ein zweites Glied, das an der Basis oder dem ersten Glied schwenkbar gelagert ist. Das erste Glied und das zweite Glied sind jeweils mittels eines separaten Aktors bezüglich eines Freiheitsgrades in eine Richtung bewegbar. Insbesondere ist das erste Glied mittels eines ersten der separaten Aktoren bezüglich der Basis in eine Richtung schwenkbar. Insbesondere ist das zweite Glied mittels eines zweiten der separaten Aktoren relativ zu der Basis und oder dem ersten Glied schwenkbar.

Um nun die Anzahl an Antriebseinheiten gegenüber einer vollständigen Aktuierung zu verringern, ist erfindungsgemäß vorgesehen, dass das erste Glied und das zweite Glied mittels einer einzigen Gegenaktoreinrichtung nur gemeinsam bezüglich des Freiheitsgrades entgegen der Richtung bewegbar sind. Beispielsweise umfasst die Gegenaktoreinrichtung genau einen Gegenaktor. Insbesondere sind das erste Glied und das zweite Glied aufgrund der separaten Aktoren bezüglich des Freiheitsgrades unabhängig voneinander in die Richtung bewegbar. Aufgrund der einzigen Gegenaktoreinrichtung können das erste Glied und das zweite Glied bezüglich des Freiheitsgrades entgegen der Richtung nur gemeinsam bewegbar sein. Die Aktoren sowie die Gegenaktoreinrichtung können als Antriebseinheit für die Glieder aufgefasst werden. Beispielsweise umfassen die Aktoren und/oder die Gegenaktoreinrichtung einen elektrischen, pneumatischen oder hydraulischen Antrieb. Der elektrische Antrieb kann ein Elektromotor, beispielsweise einen Rotationsmotor oder einen Linearmotor, aufweisen. Der Freiheitsgrad des ersten Gliedes und der Freiheitsgrad des zweiten Gliedes bezüglich dessen das jeweilige Glied des jeweiligen Aktors bewegbar ist, können sich unterscheiden.

Erfindungsgemäß ist die Robotereinheit als Roboterhand ausgebildet ist, wobei die Robotereinheit mehrere Finger umfasst, welche an der Basis angeordnet sind, wobei jeder der Finger mehrere Glieder umfasst, wovon das erste Glied und das zweite Glied gleichartige Fingerteile unterschiedlicher der Finger ausbilden. Glieder, welche gleichartige Fingerteile ausbilden, sind insbesondere über eine gleiche Anzahl an weiteren Gliedern an der Basis angeordnet. In einer Ausführungsform sind das erste Glied und das zweite Glied direkt schwenkbar an der Basis gelagert. In einer anderen Ausführungsform der Erfindung sind das erste Glied und das zweite Glied über ein jeweiliges weiteres Glied an der Basis angeordnet. Erfindungsgemäß repräsentieren das erste Glied und das zweite Glied gleichartige Fingerteile unterschiedlicher der Finger. Vorzugsweise weist die Robotereinheit mehrere, vorzugsweise vier, gleichartige Finger auf. Zusätzlich kann die Robotereinheit einen weiteren, insbesondere fünften, Finger aufweisen, der von den übrigen Fingern abweicht. Erfindungsgemäß sind die Glieder mittels einer einzigen Gegenaktoreinrichtung bezüglich des Freiheitsgrades entgegen der Richtung bewegbar. Somit ist die Einsparung mehrerer Gegenaktoren gegenüber dem Stand der Technik möglich. Da die mehreren Finger vorzugsweise eine gleichartige Bewegbarkeit aufweisen, beispielsweise eine Schwenkbarkeit bezüglich derselben Raumrichtung, kann ein Verlust an Gewandtheit der Robotereinheit durch den Verzicht auf Antriebseinheiten gegenüber dem Stand der Technik reduziert sein.

Es ist außerdem vorgesehen, dass sämtliche Glieder, welche jeweils gleichartige Fingerteile unterschiedlicher der Finger ausbilden, von der Gegenaktoreinrichtung nur gemeinsam und von jeweiligen Aktoren einzeln bewegbar sind. Mit anderen Worten können die Glieder, die gleichartige Fingerteile unterschiedlicher der Finger ausbilden, bezüglich des Freiheitsgrades in die Richtung durch separate Aktoren unabhängig voneinander bewegbar sein. Bezüglich des Freiheitsgrades in die entgegengesetzte Richtung sind die Glieder, welche jeweils gleichartige Fingerteile unterschiedlicher der Finger ausbilden, von der Gegenaktoreinrichtung insbesondere nur gemeinsam bewegbar. Vorzugsweise sind die Glieder bezüglich des Freiheitsgrades in der Richtung durch die jeweiligen Aktoren einzeln bewegbar, in welcher sich ein Beugungswinkel zwischen Gliedern der Finger untereinander und/oder gegenüber der Basis verringert. Insbesondere sind die Finger beziehungsweise die Glieder der Finger von den jeweiligen Aktoren unabhängig voneinander anwinkelbar beziehungsweise in eine angewinkelte Stellung bewegbar. Dies wird im Englischen auch als "Flection" bezeichnet. Die mehreren Finger beziehungsweise deren Glieder können durch die Gegenaktoreinrichtung streckbar sein beziehungsweise in eine gestreckte Position bewegbar sein. Dies wird im Englischen auch als "Extension" bezeichnet. Vorzugsweise ist die Robotereinheit derart ausgebildet, dass die Finger beziehungsweise deren Glieder bei einem Greifen durch die Robotereinheit und/oder bei einem Schließen der Roboterhand unabhängig voneinander durch die jeweiligen Aktoren bewegbar sind. Insbesondere sind die Finger beziehungsweise deren Glieder bei einem Öffnen der Roboterhand nur gemeinsam durch die Gegenaktoreinrichtung bewegbar.

Erfindunsgemäß ist außerdem vorgesehen, dass die Gegenaktoreinrichtung eine Anordnung zweier gekoppelter Gegenaktoren aufweist, wobei eine unterschiedliche Bewegung der Finger durch gleichläufige und/oder gegenläufige Bewegbarkeit der Gegenaktoren, die durch die Gegenaktoreinrichtung umfasst sind, ermöglicht ist. Beispielsweise sind die gekoppelten Gegenaktoren durch eine Verbindung, beispielsweise eine Stange, verbunden. Beispielsweise sind mehrere Glieder, welche durch die Gegenaktoreinrichtung bewegbar sind, an unterschiedlichen Befestigungspunkten des Verbindung mittels angeordnet. Auf diese Weise können trotz einer einzelnen Gegenaktoreinrichtung zum gemeinsamen Bewegen der Finger diese dennoch zumindest teilweise unterschiedlich bewegbar sein. Auf diese Weise kann der Verlust an Gewandtheit aufgrund der einzigen Gegenaktoreinrichtung besonders gering sein.

Eine Weiterbildung der Erfindung sieht vor, dass die Aktoren dazu ausgebildet sind, das erste Glied und das zweite Glied gemäß demselben Freiheitsgrad jeweils in dieselbe Richtung zu bewegen. Mit anderen Worten können die jeweiligen Aktoren dazu ausgebildet sein, das erste Glied und das zweite Glied bezüglich einer vorbestimmten Raumrichtung als den Freiheitsgrad zu schwenken, wobei die Raumrichtung für das erste Glied insbesondere der Raumrichtung für das zweite Glied entspricht. Vorzugsweise sind die jeweiligen Aktoren dazu ausgebildet, das erste Glied und das zweite Glied bezüglich der Raumrichtung in dieselbe Richtung zu schwenken. Die Gegenaktoreinrichtung kann dazu ausgebildet sein, das erste Glied und das zweite Glied gemäß der vorbestimmten Raumrichtung in die entgegengesetzte Richtung, insbesondere bezogen auf die Richtung der Aktoren, zu bewegen. Durch diese Ausführungsform der Erfindung ist es möglich, das erste Glied und das zweite Glied bezüglich des Freiheitsgrades in der Richtung unabhängig voneinander zu bewegen und dadurch in dieser Richtung bezüglich des Freiheitsgrades eine hohe Gewandtheit der Robotereinheit zu ermöglichen. Entgegen der Richtung bezüglich des Freiheitsgrades kann unter Verringerung der Gewandtheit der Robotereinheit die Anzahl an Gegenaktoren verringert sein. Dabei ist die Richtung bezüglich des Freiheitsgrades, in welche das erste Glied und das zweite Glied durch die separaten Aktoren unabhängig bewegbar sind, insbesondere derart ausgerichtet, dass sie eine Richtung entspricht, in der ein größeres Maß an Gewandtheit gegenüber der entgegengesetzten Richtung erforderlich ist.

Eine Weiterbildung der Erfindung sieht vor, dass die Robotereinheit neben dem ersten Glied und dem zweiten Glied mindestens ein weiteres Glied aufweist und dass alle Glieder von der Gegenaktoreinrichtung nur gemeinsam bewegbar sind.

Eine Weiterbildung der Erfindung sieht vor, dass die Aktoren dazu ausgebildet sind, die Glieder derart zu bewegen, dass ein Beugungswinkel zwischen dem ersten Glied und der Basis sowie zwischen dem zweiten Glied und dem ersten Glied oder der Basis verringert wird. Vorzugsweise liegen die jeweiligen Beugungswinkel auf derselben Seite der Glieder beziehungsweise der Robotereinheit. Vorzugsweise liegen die jeweiligen Beugungswinkel auf derselben Seite einer Ebene, die parallel zur Basis verläuft. Vorzugsweise handelt es sich beim Verringern des Beugungswinkels zwischen dem ersten Glied und der Basis sowie zwischen dem zweiten Glied und dem ersten Glied oder der Basis um eine schließende Bewegung, vorzugsweise eine Greifbewegung. Insbesondere ist durch Verringern des Beugungswinkels ein Gegenstand durch die Robotereinheit greifbar. Bei der Bewegung des ersten Glieds und des zweiten Glieds, bei welcher die jeweiligen Beugungswinkel verringert werden, kann es sich um eine Bewegung handeln, die ein höheres Maß an Gewandtheit erfordert, als eine Bewegung des ersten Gliedes und des zweiten Gliedes, bei welcher der Beugungswinkel vergrößert wird. Daher ist es besonders vorteilhaft, dass das erste Glied und das zweite Glied beim Verringern des Beugungswinkels durch die separaten Aktoren unabhängig bewegbar sind.

Eine Weiterbildung sieht vor, dass jedes Glied einen jeweiligen Aktor aufweist, wobei für jeden der Freiheitsgrade jeweils nur eine einzige Gegenaktoreinrichtung zum jeweiligen gemeinsamen Bewegen aller Glieder vorhanden ist.

Eine Weiterbildung sieht vor, dass der Aktor und die Gegenaktoreinrichtung über jeweilige Verbindungselemente mit dem ersten Glied und dem zweiten Glied verbunden sind. Insbesondere sind der jeweilige Aktor und/oder die Gegenaktoreinrichtung nicht direkt an dem ersten Glied und/oder dem zweiten Glied angeordnet. Die jeweiligen Verbindungselemente können dazu ausgebildet sein, eine Antriebskraft von dem Aktor und der Gegenaktoreinrichtung an das erste Glied und das zweite Glied zu übertragen. Insbesondere sind an jedem der Glieder zwei Verbindungselemente angeordnet, wobei ein erstes der Verbindungselemente mit dem Aktor und ein zweites der Verbindungselemente mit der Gegenaktoreinrichtung verbunden sind. Durch die räumliche Trennung zwischen Gliedern und Antriebseinheit kann eine besonders kompakte Bauform der Robotereinheit und/oder der Finger gegeben sein.

Eine Weiterbildung sieht vor, dass die jeweiligen Verbindungselemente nach Art eines Seilzugs ausgebildet sind. Beispielsweise ist die Antriebskraft des Aktors und/oder der Gegenaktoreinrichtung mittels eines Seiles zu dem Glied übertragbar. Das Seil kann um eine Achse, beispielsweise um Lenkrollen oder Kanten, einfach umgelenkt sein. Der Seilzug ermöglicht eine besonders einfache und platzsparende Form der Kraftübertragung. Ein Seil des Seilzugs kann die Antriebskraft nur auf Zug übertragen. Somit ist die Übertragung der Antriebskraft des Aktors und/oder der Gegenaktoreinrichtung nur in einer Richtung ermöglicht. Insbesondere aus diesem Grund sind ist jedes der Glieder mittels des Aktors und der Gegenaktoreinrichtung nur jeweils in eine Richtung bewegbar.

Eine Weiterbildung sieht vor, dass jedes Verbindungselement ein elastisches Element aufweist. Insbesondere Verbindungselemente, die an der Gegenaktoreinrichtung angeordnet sind, können das elastische Element aufweisen. In diesem Fall können die Verbindungselemente der Gegenaktoreinrichtung auch darunter Spannung gehalten werden, wenn die jeweiligen Aktoren das erste Glied und das zweite Glied in eine unterschiedliche Position bewegen.

Eine Weiterbildung sieht vor, dass die Aktoren und die Gegenaktoreinrichtung dazu ausgebildet sind, die Glieder, insbesondere ausschließlich, mittels einer über die jeweiligen Verbindungselemente übertragenen Antriebskraft zu bewegen. Die Glieder können beispielsweise ein Gelenk umfassen, über das diese an einem anderen der Glieder oder an der Basis angeordnet sind. Die Antriebskraft aus dem Aktor oder der Gegenaktoreinrichtung kann somit an dem Glied in die Bewegung umgesetzt werden.

Eine Weiterbildung sieht vor, dass die Roboterhand hinsichtlich Beweglichkeit und Anzahl der Glieder einer menschlichen Hand nachempfunden ist. Beispielsweise weist die Roboterhand vier entlang derselben Raumrichtung ausgerichtete Finger auf, welche jeweils aus drei Gliedern bestehen. Zusätzlich kann die Roboterhand den weiteren Finger aufweisen, deren gemäß einer weiteren Raumrichtung ausgerichtet ist und beispielsweise zwei Glieder umfasst. Beispielsweise können die Finger beziehungsweise die einzelnen Glieder in einem Winkelbereich von 90° bis 180° zu einem benachbarten der Glieder desselben Fingers bewegbar sein. Beispielsweise ist das Glied jedes Fingers, das direkt an der Basis angeordnet ist, in einem Winkelbereich von 90° bis 180° relativ zur Basis schwenkbar. In diesem Fall kann eine besonders intuitive Steuerung der Robotereinheit ermöglicht sein, da sich diese an eine Bewegung einer menschlichen Hand anlehnt. Beispielsweise sind einzelne Finger einer menschlichen Hand üblicherweise nicht vollständig unabhängig bewegbar.

Ein weiterer Aspekt der Erfindung betrifft eine technische Apparatur mit einer Robotereinheit der oben genannten Art. Die Robotereinheit ist über die Basis an einer anderen Komponente der technischen Apparatur angeordnet. Beispielsweise ist die technische Apparatur Teil einer Fertigungsstraße oder eines Fertigungsgeräts zur Herstellung von Erzeugnissen.

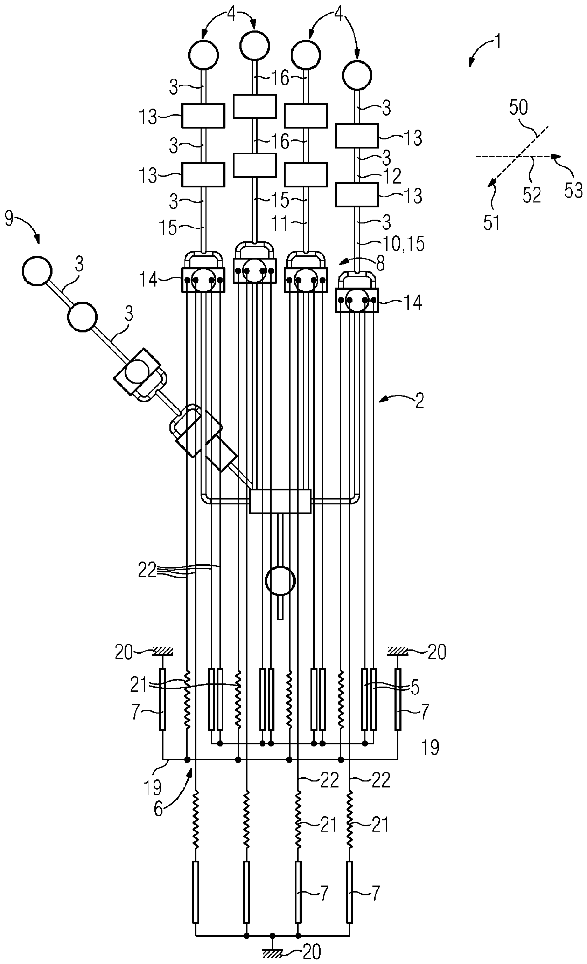

Die einzige FIG zeigt eine Robotereinheit 1 in einer schematischen Vorderansicht. Die Robotereinheit 1 ist als Roboterhand 8 ausgebildet und umfasst vorliegend vier Finger 4, die einer Basis 2 schwenkbar angeordnet sind. Jeder der Finger 4 umfasst vorliegend drei Glieder 3. Die Robotereinheit 1 umfasst vorliegend zusätzlich einen fünften Finger 9, der zwei Glieder 3 umfasst. Die Robotereinheit 1 beziehungsweise die Roboterhand 8 ist hinsichtlich einer Beweglichkeit und Anzahl der Glieder 3 einer menschlichen Hand nachempfunden. Insbesondere repräsentieren die übrigen Finger übrige Finger der menschlichen Hand. Insbesondere repräsentiert der fünfte Finger 9 einen Daumen einer menschlichen Hand.

Jedes der Glieder 3 ist schwenkbar an der Basis 2 oder einem weiteren der Glieder 3 gelagert. Insbesondere sind untere Glieder 15 schwenkbar an der Basis 2 gelagert. Vorliegend sind die unteren Glieder 15 über eine Gelenkeinheit 14 an der Basis 2 gelagert. Insbesondere sind die Gelenkseinheiten 14 ein Teil der unteren Glieder 15. Ein erstes Glied 10 kann an der Basis 2 schwenkbar gelagert sein. Ein zweites Glied 11 kann an der Basis 2 schwenkbar gelagert sein. Ein weiteres zweites Glied 12 kann an dem ersten Glied 10 schwenkbar gelagert sein. Obere Glieder 16 sind vorliegend an einem der Glieder 3 schwenkbar gelagert. Insbesondere sind die oberen Glieder 16 über weitere Gelenkeinheiten 13 jeweils an einem der unteren Glieder 15 oder einem weiteren der oberen Glieder 16 gelagert. Ein weiteres zweites Glied 12 kann an dem ersten Glied 10 schwenkbar gelagert sein.

Die Glieder 3 können durch jeweilige Aktoren 5 und Gegenaktoren 7 bewegbar sein. Die Gegenaktoreinrichtung 6 weist eine Anordnung zweier gekoppelter Gegenaktoren 7 auf. Vorliegend sind hierzu zwei der Gegenaktoren 7 über eine Verbindung 19, beispielsweise einer Stange oder einem beliebigen Bauteil, zu der Gegenaktoreinrichtung 6 zusammengeschlossen. Beispielsweise sind die Aktoren 5 und die Gegenaktoren 7 als elektrischer, pneumatischer, piezohydraulischer oder hydraulischer Antrieb ausgeführt. Der elektrische Antrieb kann als Elektromotor, beispielsweise als Rotationsmotor oder als Linearmotor, ausgeführt sein.

Insbesondere ist jedes der Glieder 3 über ein jeweiliges Verbindungselement 22 mit einem jeweiligen Aktor 5 verbunden. Zusätzlich ist jedes der Glieder 3 über ein Verbindungselement 22 mit einem der Gegenaktoren 7 oder der Gegenaktoreinrichtung 6 verbunden. Aktoren 5, Gegenaktoren 7 sowie Verbindungselemente 22 sind in der FIG aus Gründen der Übersichtlichkeit nur für die unteren Glieder 15 beziehungsweise die Gelenkeinheiten 14 der unteren Glieder 15 dargestellt. Die Verbindungselemente 22 sind jeweils nach Art eines Seilzugs ausgeführt. Jedes der Verbindungselemente 22 oder einzelne der Verbindungselemente 22 können ein jeweiliges elastisches Element 21 aufweisen.

Jedes der unteren Glieder 15 ist durch einen separaten Aktor 5 bezüglich eines ersten Freiheitsgrades 50 in eine Richtung 51 bewegbar. Vorliegend ist jedes der unteren Glieder 15 durch einen separaten Aktor 5 bezüglich eines zweiten Freiheitsgrades 52, insbesondere unabhängig von weiteren der unteren Glieder 15, in eine Richtung 53 bewegbar. Vorliegend ist jedes der unteren Glieder 15 mit zwei jeweiligen Aktoren 5 verbunden, wobei jeder der zwei Aktoren 5 die Bewegung bezüglich eines jeweiligen Freiheitsgrades 50, 52 ermöglicht.

Bezüglich des zweiten Freiheitsgrades 52 ist jedes der unteren Glieder 15 vorliegend mittels eines separaten Gegenaktors 7 entgegen der Richtung 53 bewegbar. Die unteren Glieder 15 können bezüglich des zweiten Freiheitsgrades 52 sowohl in die Richtung 53 als auch entgegen der Richtung 53 unabhängig bewegbar sein. Die unteren Glieder 15 sind vorliegend bezüglich des Freiheitsgrades 50 entgegen der Richtung 51 mittels der Gegenaktoreinrichtung 6 nur gemeinsam bewegbar. Somit ist gegenüber einer vollständigen Aktuierung der Robotereinheit 1 die Anzahl an Gegenaktoren 7 verringert.

Die Finger 4 sind vorliegend durch die Gegenaktoreinrichtung 6 gemäß dem ersten Freiheitsgrad 50 so entgegen der Richtung 51 bewegbar, dass die Roboterhand 8 eine Öffnungsbewegung ("Extension") ausführt. Insbesondere kann für die Öffnungsbewegung eine Vergrößerung des Winkels, vorzugsweise auf der Innenseite der Roboterhand 8, zwischen zwei benachbarten der Glieder 3 vorgesehen sein. Insbesondere kann für die Öffnungsbewegung eine Vergrößerung des Winkels, vorzugsweise auf der Innenseite der Roboterhand 8, zwischen einem der unteren Glieder 15 und der Basis 2 vorgesehen sein. Bei der Öffnungsbewegung sind die unteren Glieder 15 vorliegend durch die Gegenaktoreinrichtung 6 nur gemeinsam bewegbar. Dadurch, dass die unteren Glieder 15 bei der Öffnungsbewegung nur gemeinsam bewegbar sind, ist gegenüber einer vollständigen Aktuierung der Robotereinheit 1 die Anzahl an Gegenaktoren 7 verringert. Die Robotereinheit 1 ist somit unteraktuiert. Dadurch, dass die Gegenaktoreinrichtung 6 zwei Gegenaktoren 7 umfasst ist trotz der Unteraktuierung eine unterschiedliche Bewegung der unteren Glieder 15 ermöglicht. Insbesondere sind durch eine gleichläufige und/oder gegenläufige Bewegbarkeit der Gegenaktoren 7, die durch die Gegenaktoreinrichtung 6 umfasst sind, unterschiedliche Bewegungen der Finger 4 möglich.

Die Finger 4 sind vorliegend durch die Aktoren 5 gemäß dem ersten Freiheitsgrad 50 so in die Richtung 51 bewegbar, dass die Roboterhand 8 eine Greifbewegung ("Flection") ausführt. Insbesondere kann für die Greifbewegung eine Verringerung eines Winkels, vorzugsweise auf einer Innenseite der Roboterhand 8, zwischen zwei benachbarten der Glieder 3 vorgesehen sein. Insbesondere kann für die Greifbewegung eine Verringerung eines Winkels, vorzugsweise auf der Innenseite der Roboterhand 8, zwischen einem der unteren Glieder 15 und der Basis 2 vorgesehen sein. Bei der Greifbewegung sind die unteren Glieder 15 vorliegend jeweils durch die separaten Aktoren 5 einzeln und unabhängig bewegbar. Somit ist trotz der Unteraktuierung eine hohe Gewandtheit der Robotereinheit 1 bei der Greifbewegung gewährleistet.

Durch das jeweilige elastische Element 21 können die Verbindungselemente 22 stets unter Spannung gehalten werden. Insbesondere ist eine Spannung der Verbindungselemente 22 auch dann gewährleistet, wenn ein einzelnes der unteren Glieder 15 bewegt wird. Ohne die Verbindungselemente 22 kann in diesem Fall ein Spannungsverlust auftreten, die die Gegenaktoreinrichtung 6 der Bewegung des Aktors 5 nicht frei folgen kann.

Aufgrund der einzelnen Gegenaktoreinrichtung 6 kann aus einer Bewegung gemäß dem ersten Freiheitsgrad 50 entgegen der Richtung 51 eines der Finger 4 stets auch eine Bewegung benachbarter der Finger 4 gemäß dem ersten Freiheitsgrad 50 folgen. Beispielsweise kann aus einer Bewegung des ersten Glieds 10 eine Bewegung aller Finger 4 folgen. Dadurch, dass die Gegenaktoreinrichtung 6 zwei Gegenaktoren 7 umfasst, kann die Bewegung weiterer der Finger 4 ausgehend von dem ersten Glied 10 mit größerem Abstand immer kleiner werden.

Die Roboterhand 8 ist bezüglich Anzahl und Bewegbarkeit der Finger 4 einer menschlichen Hand nachempfunden. Nebeneinanderliegende Finger der menschlichen Hand können nicht vollständig unabhängig voneinander bewegbar sein. Somit weicht die Bewegbarkeit der Roboterhand 8 trotz der Unteraktuierung vorzugsweise nur geringfügig von einer Bewegbarkeit der menschlichen Hand ab.

Diejenigen der Glieder 3, die über eine gemeinsame Gegenaktoreinrichtung 6 bewegbar sind, können als eine Gruppe, insbesondere als eine synergetische Gruppe, aufgefasst werden. Derartige Gruppen können unter den Gliedern 3 beliebig gebildet sein. Vorzugsweise weisen die Glieder 3 einer Gruppe für jeden der Freiheitsgrade 50, 52 eine jeweilige Gegenaktoreinrichtung 6 auf. Alternativ weisen die Glieder 3 einer Gruppe für mehrere der Freiheitsgrade 50, 52 nur eine gemeinsame Gegenaktoreinrichtung 6 auf. Insbesondere können derartige Gruppen für solche der Glieder 3 gebildet sein, welche eine ähnliche Bewegbarkeit aufweisen. Beispielsweise kann in einem Extremfall genau eine Gegenaktoreinrichtung 6 für alle der Glieder 3 vorgesehen sein. Beispielsweise können Glieder 3, welche jeweils einen gleichartigen Fingerteil der Finger 4 ausbilden, eine Gruppe bilden. Beispielsweise bilden die unteren Glieder 15 jeweilige einen gleichartigen Fingerteil der Finger 4 aus.

Bei der Greifbewegung kann eine höhere Kraft zum Bewegen der Glieder 3 nötig sein, als bei der Öffnungsbewegung. Insbesondere ist somit trotz einer geringeren Anzahl an Gegenaktoren 7 verglichen mit der Anzahl an Aktoren 5 keine größere Leistungsfähigkeit der Gegenaktoren 7 verglichen mit den Aktoren 5 nötig.

## Patentansprüche

1. Robotereinheit (1) für eine technische Apparatur, mit
- einer Basis (2), über welche die Robotereinheit (1) an der technischen Apparatur anordenbar ist, und mit
- einem ersten Glied (10), das an der Basis (2) schwenkbar gelagert ist, und
- einem zweiten Glied (11), das an der Basis (2) schwenkbar gelagert ist, wobei
- das erste Glied (10) und das zweite Glied (11) jeweils mittels eines separaten Aktors (5) bezüglich eines Freiheitsgrades (50) in eine Richtung (53) bewegbar sind,
**dadurch gekennzeichnet, dass**
- das erste Glied (10) und das zweite Glied (11) mittels einer einzigen Gegenaktoreinrichtung (6) nur gemeinsamen bezüglich des Freiheitsgrades (52) entgegen der Richtung (53) bewegbar sind, wobei
- die Robotereinheit (1) mehrere Finger (4) umfasst, welche an der Basis (2) angeordnet sind, wobei jeder der Finger (4) mehrere Glieder (3) umfasst, wovon das erste Glied (10) und das zweite Glied (11) gleichartige Fingerteile unterschiedlicher der Finger (4) ausbilden, wobei
- sämtliche Glieder (3), welche jeweils gleichartige Fingerteile unterschiedlicher der Finger (4) ausbilden, von der Gegenaktoreinrichtung (6) nur gemeinsam und von jeweiligen Aktoren (5) einzeln bewegbar sind, und wobei
- die Gegenaktoreinrichtung (6) eine Anordnung zweier gekoppelter Gegenaktoren (7) aufweist, wobei eine unterschiedliche Bewegung der Finger (4) durch gleichläufige und/oder gegenläufige Bewegbarkeit der Gegenaktoren (7), die durch die Gegenaktoreinrichtung (6) umfasst sind, ermöglicht ist.

2. Robotereinheit (1) nach Anspruch 1, **dadurch gekennzeichnet, dass** die Aktoren (5) dazu ausgebildet sind, das erste Glied (10) und das zweite Glied (11) gemäß demselben Freiheitsgrad (50) jeweils in dieselbe Richtung (51) zu bewegen.

3. Robotereinheit (1) nach Anspruch 1 oder 2, **dadurch gekennzeichnet, dass** sie neben dem ersten Glied (10) und dem zweiten Glied (11) mindestens ein weiteres Glied (3) aufweist, und alle Glieder (3) von der Gegenaktoreinrichtung (6) nur gemeinsam bewegbar sind.

4. Robotereinheit (1) nach einem der vorhergehenden Ansprüche, **dadurch gekennzeichnet, dass** die Aktoren (5) dazu ausgebildet sind, die Glieder (3) derart zu bewegen, dass ein Beugungswinkel zwischen dem ersten Glied (10) und der Basis (2) sowie zwischen dem zweiten Glied (11) und dem ersten Glied (10) oder der Basis (2) verringert wird.

5. Robotereinheit (1) nach einem der vorhergehenden Ansprüche, **dadurch gekennzeichnet, dass** jedes Glied (3) einen jeweiligen Aktor (5) aufweist, wobei für jeden der Freiheitsgrade (50, 52) jeweils nur eine einzige Gegenaktoreinrichtung (6) zum jeweiligen gemeinsamen Bewegen aller Glieder (3) vorhanden ist.

6. Robotereinheit (1) nach einem der vorhergehenden Ansprüche, **dadurch gekennzeichnet, dass** der Aktor (5) und die Gegenaktoreinrichtung (6) über jeweilige Verbindungselemente (22) mit dem ersten Glied (10) und dem zweiten Glied (11) verbunden sind.

7. Robotereinheit (1) nach Anspruch 6, **dadurch gekennzeichnet, dass** die jeweiligen Verbindungselemente (22) nach Art eines Seilzugs ausgebildet sind.

8. Robotereinheit (1) nach Anspruch 6 oder 7, **dadurch gekennzeichnet, dass** jedes Verbindungselement (22) ein elastisches Element (21) aufweist.

9. Robotereinheit (1) nach einem der Anspruch 7 oder 8, **dadurch gekennzeichnet, dass** die Aktoren (5) und die Gegenaktoreinrichtung (6) dazu ausgebildet sind, die Glieder (3), insbesondere ausschließlich, mittels einer über die jeweiligen Verbindungselemente (22) übertragenen Antriebskraft zu bewegen.

10. Robotereinheit (1) nach einem der vorhergehenden Ansprüche, **dadurch gekennzeichnet, dass** die Roboterhand (8) hinsichtlich Beweglichkeit und Anzahl der Glieder (3) einer menschlichen Hand nachempfunden ist.

11. Technische Apparatur mit einer Robotereinheit (1) nach einem der vorhergehenden Ansprüche, wobei die Robotereinheit (1) über die Basis (2) an einer anderen Komponente der technischen Apparatur angeordnet ist.

## Claims

1. Robot unit (1) for a technical apparatus, having
- a base (2) via which the robot unit (1) can be arranged on the technical apparatus, and having
- a first member (10), which is pivot-mounted on the base (2), and
- a second member (11), which is pivot-mounted on the base (2), wherein
- the first member (10) and the second member (11) are each movable in one direction (53) relative to a degree of freedom (50) by means of a separate actuator (5),
**characterized in that**
- the first member (10) and the second member (11) are only movable together counter to the direction (53) relative to the degree of freedom (52) by means of a single counter actuator device (6), wherein
- the robot unit (1) comprises a plurality of fingers (4), which are arranged on the base (2), wherein each of the fingers (4) comprises a plurality of members (3), of which the first member (10) and the second member (11) form identical finger parts of different fingers (4), wherein
- all members (3) respectively forming identical finger parts of different fingers (4) are movable only in common by the counter actuator device (6) and individually by respective actuators (5), and wherein
- the counter actuator device (6) comprises an arrangement of two coupled counter actuators (7), wherein a different movement of the fingers (4) is made possible by a forward and/or contrary mobility of the counter actuators (7) comprised in the counter actuator device (6).

2. Robot unit (1) according to Claim 1, **characterized in that** the actuators (5) are designed to move the first member (10) and the second member (11) according to the same degree of freedom (50) respectively in the same direction (51).

3. Robot unit (1) according to Claim 1 or 2, **characterized in that** it comprises, besides the first member (10) and the second member (11), at least one further member (3), and all members (3) are movable only in common by the counter actuator device (6) .

4. Robot unit (1) according to one of the preceding claims, **characterized in that** the actuators (5) are designed to move the members (3) in such a way that a bending angle between the first member (10) and the base (2) and between the second member (11) and the first member (10) or the base (2) is decreased.

5. Robot unit (1) according to one of the preceding claims, **characterized in that** each member (3) comprises a respective actuator (5), wherein, for each of the degrees of freedom (50, 52), in each case only a single counter actuator device (6) is present for the respective common movement of all members (3).

6. Robot unit (1) according to one of the preceding claims, **characterized in that** the actuator (5) and the counter actuator device (6) are connected via respective connection elements (22) to the first member (10) and the second member (11).

7. Robot unit (1) according to Claim 6, **characterized in that** the respective connection elements (22) are designed as a cable pull.

8. Robot unit (1) according to Claim 6 or 7, **characterized in that** each connection element (22) comprises an elastic element (21) .

9. Robot unit (1) according to either of Claims 7 and 8, **characterized in that** the actuators (5) and the counter actuator device (6) are designed to move the members (3) by means of a drive force transmitted via the respective connection elements (22), particularly exclusively in this way.

10. Robot unit (1) according to one of the preceding claims, **characterized in that** the robot hand (8) is modelled on a human hand in terms of its mobility and number of members (3).

11. Technical apparatus having a robot unit (1) according to one of the preceding claims, wherein the robot unit (1) is arranged via the base (2) on another component of the technical apparatus.

## Revendications

1. Unité (1) de robot d'un équipement technique, comprenant
- une base (2), par laquelle l'unité (1) de robot peut être montée sur l'équipement technique, et comprenant
- un premier membre (10), qui est monté pivotant sur la base (2), et
- une deuxième membre (11), qui est monté pivotant sur la base (2), dans laquelle
- le premier membre (10) et le deuxième membre (11) sont, respectivement, au moyen d'un actionneur (5) distinct, mobiles dans un sens (53) suivant un degré (50) de liberté,
**caractérisée en ce que**
- le premier membre (10) et le deuxième membre (11) sont, au moyen d'un dispositif (6) actionneur antagoniste unique, mobiles, contrairement au sens (53) suivant le degré (52) de liberté, seulement conjointement, dans laquelle
- l'unité (1) de robot comprend plusieurs doigts (4), qui sont montés sur la base (2), dans laquelle chacun des doigts (4) comprend plusieurs membres (3), dont le premier membre (10) et le deuxième membre (11) constituent des parties de doigt de même type différentes des doigts (4), dans laquelle
- l'ensemble des membres (3), qui constituent chacun des parties de doigt de même type différentes des doigts (4), peuvent être déplacés par le dispositif (6) actionneur antagoniste seulement conjointement et par des actionneurs (5) respectifs individuellement, et dans laquelle
- le dispositif (6) actionneur antagoniste a un agencement de deux actionneurs (7) antagonistes couplés, un déplacement différent des doigts (4) est rendu possible par une possibilité de se déplacer dans le même sens et/ou en sens contraire des actionneurs (7) antagonistes, qui sont compris dans le dispositif (6) actionneur antagoniste.

2. Unité (1) de robot suivant la revendication 1, **caractérisée en ce que** les actionneurs (5) sont constitués pour déplacer, respectivement, dans le même sens (51), le premier membre (10) et le deuxième membre (11) suivant le même degré (50) de liberté.

3. Unité (1) de robot suivant la revendication 1 ou 2, **caractérisée en ce qu'**elle a, outre le premier membre (10) et le deuxième membre (11), au moins un autre membre (3) et tous les membres (3) peuvent être déplacés seulement conjointement par le dispositif (6) actionneur antagoniste.

4. Unité (1) de robot suivant l'une des revendications précédentes, **caractérisée en ce que** les actionneurs (5) sont constitués pour déplacer les membres (3) de manière à diminuer un angle de diffraction entre le premier membre (10) et la base (2), ainsi qu'entre le deuxième membre (11) et le premier membre (10) ou la base (2).

5. Unité (1) de robot suivant l'une des revendications précédentes, **caractérisée en ce que** chaque membre (3) a son propre actionneur (5), dans laquelle, pour chacun des degrés (5, 52) de liberté, il y a, respectivement, seulement un dispositif (6) actionneur antagoniste unique pour déplacer conjointement tous les membres (3).

6. Unité (1) de robot suivant l'une des revendications précédentes, **caractérisée en ce que** l'actionneur (5) et le dispositif (6) actionneur antagoniste sont reliés au premier membre (10) et au deuxième membre (11) par des éléments (22) respectifs de liaison.

7. Unité (1) de robot suivant la revendication 6, **caractérisée en ce que** les éléments (22) respectifs de liaison sont constitués à la manière d'un câble.

8. Unité (1) de robot suivant la revendication 6 ou 7, **caractérisé en ce que** chaque élément (22) de liaison a un élément (21) élastique.

9. Unité (1) de robot suivant l'une des revendications 7 ou 8, **caractérisée en ce que** les actionneurs (5) et le dispositif (6) actionneur antagoniste sont constitués de manière à pouvoir déplacer les membres (3), notamment exclusivement, au moyen d'une force d'entraînement transmise par les éléments (22) respectifs de liaison.

10. Unité (1) de robot suivant l'une des revendications précédentes, **caractérisée en ce que** la main (8) du robot, en ce qui concerne la mobilité et le nombre des membres (3), peut ressentir ce que ressent une main humaine.

11. Equipement technique ayant une unité (1) de robot suivant l'une des revendications précédentes, l'unité (1) de robot étant, par la base (2), montée sur un autre élément de l'équipement technique.
